# EUROPEAN PATENT APPLICATION

(11) **EP 1 595 775 A2**
(43) Date of publication of application: **16.11.2005**
(21) Application number: 05100840.7
(22) Date of filing: 07.02.2005
(51) Int. Cl.: B62H 5/00, B62H 5/18

(54) **Anti-theft disc-locking device equipped with additional lock for engagement with a flexible anchoring element**

(30) Priority: 13.05.2004 IT MI20040223 U
(71) Applicant: MAGGI CATENE S.p.A., 23854 Olginate (LECCO) (IT)
(72) Inventor: Maggi, Corrado, 23896 Sirtori (IT)
(74) Representative: Faggioni, Carlo Maria

(57) **Abstract**

An anti-theft device for a motorvehicle is disclosed, of the type comprising a disc-locking device having a U-shaped body between whose arms a piston (4) is slideable which can be locked in a drawn out position by a safety lock (10, C), further comprising an anchoring seat (5) for a coupling head (6) engaged by a pin (8) slideable through the action of the same safety lock (10, C), said coupling head (6) being integral with the end of a flexible retaining element.

## Description

The present invention relates to an improved so-called "disc-locking" device for motorcycles.

As known, a so-called "disc-locking" device is very popular among motorcyclists as an anti-theft device. Said device is a small U-shaped block, equipped with a locking pin, controlled by a safety lock, which can be drawn in and out between the two arms of the U-shaped body. The block is arranged across a brake disc of a motorcycle and locked there, by entering the locking pin in one of the holes located on the disc and locking it in a drawn out position by means of the safety lock. The disc-locking device, thus applied, prevents free rotation of the wheel, since said device would come into conflict with the clamping assembly of the disc brake, and it consequently has an anti-robbery function.

This device has been extremely successful because it is particularly easy to use, handy, light-weight and compact.

Despite these indisputable advantages, however, the anti-robbery capability of this device is limited, since it discourages occasional robbers, but it does not prevent the motorvehicle from being lifted and carried away using another larger vehicle. Further, it does not even prevent another disagreeable possibility, i.e. that the wheel onto which the disc-locking device is installed is taken off - and possibly replaced with a new wheel devoid of locks to tow away the motorvehicle.

It is an object of the present invention to overcome this disadvantage, by providing an improved disc-locking device which incorporates an additional locking system, also apt to allow fastening of the motorcycle to structures anchored to the ground.

Such object is achieved by a disc-locking device having the features mentioned in the attached claims.

The invention will now be described in detail with reference to the accompanying drawings, wherein:

fig. 1 is an elevation side view, partially sectioned, of the device according to the invention in an opened position;

fig. 2 is an elevation front view of a preferred device according to the invention;

fig. 3 is a section view of the device according to the invention, in a completely closed position;

fig. 4 is a partial view of fig. 3 with the main block in an open position; and

fig. 5 is an elevation side view which shows a variant of a coupling for an anchoring chain.

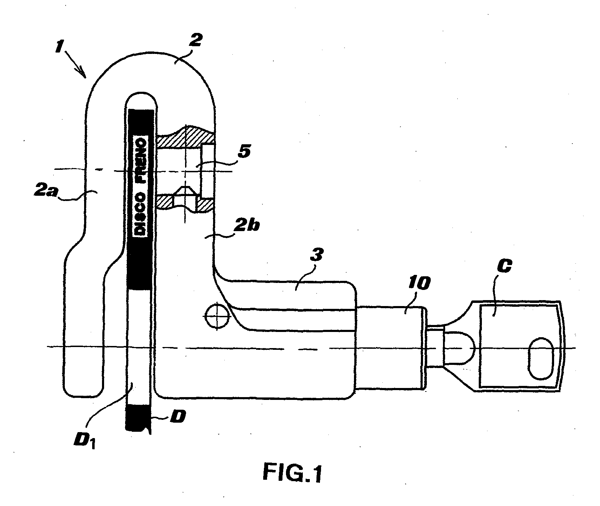

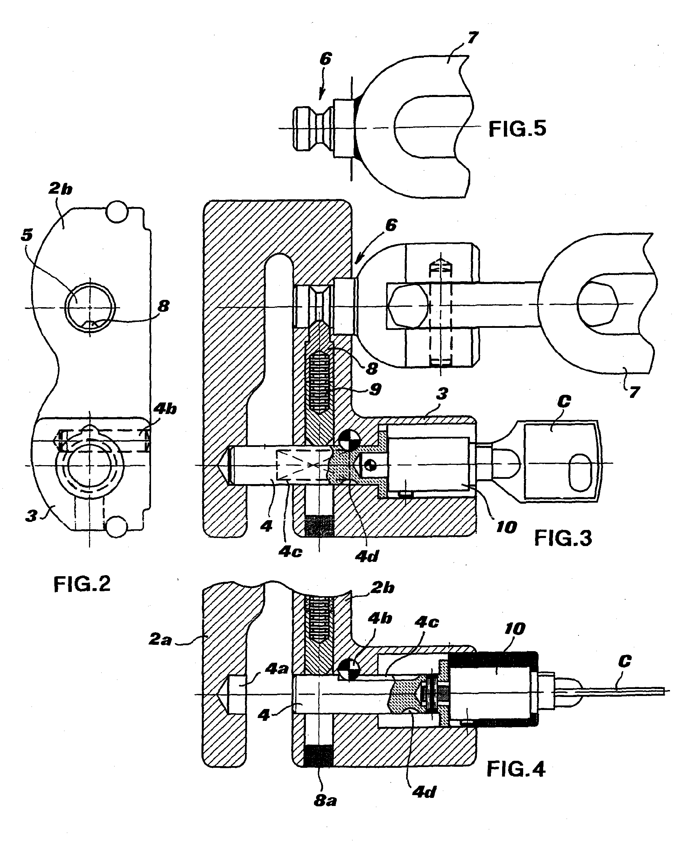

Fig. 1 illustrates a disc-locking device 1 in the form of a conventional U-shaped body 2 - equipped with two opposite arms, a front one 2b and a back one 2a - from which a lock bulb 3 projects. Within the bulb 3 a small piston 4 is mounted sliding, which can be actuated between a drawn in position (fig. 1) and a drawn out position (fig. 3) through a key C, which acts on a locking block 10 in the bulb 3. In the drawn out position, the small piston 4 is intended to partially engage with a seat 4a obtained in the opposite back arm 2a.

Between the two arms of the U-shaped body, as can be seen in fig. 1, a portion of a brake disc D can be introduced, equipped with a hole D1 into which piston 4 is intended to fit once drawn out by the key C.

According to the invention, as can be seen from the sectioned portion of fig. 1, along the front arm 2b which projects from bulb 3, is obtained a housing recess 5 for a coupling head 11, which head is in turn integral with a flexible retaining element, such as a link chain 7.

As can be clearly seen in fig. 5, the coupling head 6 has a circular groove 6a into which the end of a pin 8 sliding inside the front arm 2b (fig. 3) is intended to be inserted.

Pin 8 advantageously consists of two parts, between which an elastic spring 9 is arranged. In the locked position, as will be seen hereunder, the two pin portions are abutting one against the other and hence form a single body; in the open position, the two portions are kept apart by the spring 9 and can provisionally move closer together during drawing out of the coupling head 6 from the seat 5 thereof.

To facilitate the respective drawing out and engagement movements of the coupling head 6, against the elastic bias of the spring 9, both the ends of the two pin portions 8 have a cone-shaped end, as is evident in fig. 3.

Preferably, the cylindrical recess in which pin 8 is slidingly housed extends longitudinally to arm 2b and leads out onto the external surface of block 3, so as to ease pin insertion during installation. As can be seen in figs. 3 and 4, the exit hole of the cylindrical recess is preferably closed by a suitable closure means 8a, such as a rubber plug.

Furthermore, the main small piston 4 is rotatably and slidingly housed in its housing hole and there restrained by a transversal fixed pin 4b. Furthermore, the piston has a square-cut or undercut 4c and a circular groove 4d, the usefulness of which will be illustrated hereunder.

Finally, the main piston 4 is controlled by a lock 10 which is capable of two types of movements: a first rotation movement and a second drawing out movement, both of which can be performed with key C inserted.

In order to understand the operation, let's assume to find ourselves in the condition of fig. 3, in which the disc-locking device is fastened to the corresponding disc D, with piston 4 completely drawn out and rotated in the locked position. In this condition pin 8 also is strictly restrained in its recess, between piston 4 and head 6, and prevents the latter from coming out of its seat 5: therefore, chain 7, too, is steadily fastened to the disc-locking device. The transversal pin 4b, inserted in groove 4d, prevents lock 10 and thus piston 4 from being drawn out.

Through a 90° rotation of piston 4, which can be performed with the key inserted and pin 4b sliding within groove 4d, undercut 4c is rotated and brought into correspondence of the lower end of pin 8, thus providing a certain amount of play for the two components of the latter. In this condition, piston 4 is still drawn out, but the play acquired by the two components of pin 8 allows - by applying traction to head 6 - the bias of spring 9 being overcome and resulting in the end of pin 8 being drawn in, thus allowing to draw out the coupling head 6 from seat 5. In this way, chain 7, attached to the coupling head 6, can be released from the disc-locking device.

Furthermore, since undercut 4c faces pin 4b, it is possible to draw out also lock 10, withdrawing the same piston 4. Thereby it is also possible to release the disc-locking device from disc D.

Viceversa during application of the disc-locking device. Body 2 is arranged on disc D and piston 4 is drawn out by fully introducing lock 10. If desired, it is possible to engage the coupling head 6 of a chain in the seat 5; subsequently, the key is rotated by 90° and full locking of the disc-locking device is obtained on the disc and of chain 7 thereto.

To increase device safety, key C cannot be drawn out from the lock before both operations have been carried out.

Due to the device of the invention, advantageous all-round usefulness is obtained, fully reaching the objects set forth in the preamble.

The disc-locking device described herein - maintaining size and weight of the known prior art - can in fact still be used in a conventional way (for example whenever the motorcyclist has to take a short break), but also according to further advantageous functions. If desired, it is in fact possible to anchor the disc-locking device to a rather short chain, which has been previously closed with a loop around the wheel and around the motorvehicle fork, in order to prevent the wheel from being taken off. Again, alternatively, it is possible to anchor a chain to the disc-locking device, said chain being closed with a loop around an element fastened to the ground, for example a post, thereby preventing the motorvehicle from being lifted and carried away. And again, the disc-locking device can be used simply as a lock both for a chain forming a loop, and for a chain in which the end link is inserted between the two arms 2a and 2b and locked there by piston 4, which can then be used in a conventional way, in all those circumstances in which there is no brake disc available with a suitable hole.

It is understood, however, that the scope of the invention described above must not be considered limited to the specific exemplary embodiment illustrated, but extends to any other technically equivalent variant.

In particular, fig. 2 shows a particularly effective external form of the U-shaped body, but many modifications can be conceived.

Similarly, the coupling head 6 can form part of an adapter body, to which a universal chain link can easily be attached (as shown in fig. 3), but it could also be simply soldered to an end ring of a chain marketed together with the disc-locking device of the invention (as shown in fig. 5).

Finally, although reference has always been made to a link chain, it is understood that said type of chain can be replaced by any other flexible retaining element, for example a steel strand having a suitable end.

## Claims

1. Anti-theft device for a motorvehicle, of the type comprising a disc-locking device having a U-shaped body between whose arms a sliding piston (4) is provided which can be locked in a drawn out position by a safety lock (10, C), **characterised in that** it further comprises an anchoring seat (5) for a coupling head (6) engageable by a pin (8) which is slidable through the action of the same safety lock (10, C), said coupling head (6) being integral with the end of a flexible retaining element.

2. Anti-theft device as in claim 1), wherein said pin (8) is orthogonal to said piston and rests with its inner end on the lateral surface of the piston (4) by which the position thereof is determined.

3. Anti-theft device as in claim 2), wherein said piston (4) has an undercut (4c) on its lateral surface which, when it is arranged opposite to said pin (8) allows disengagement thereof from said coupling head (6).

4. Anti-theft device as in claim 3), wherein said piston (4) has a circular groove (4d) wherein a pin (4b), fixed to the U-shaped body and transversal to the piston, acts as a rotary guide, and wherein said undercut (4c) is arranged so that when it faces said pin (4d) it also allows displacement of the piston (4) along its axis.

5. Anti-theft device as in any one of the previous claims, wherein said pin (8) is comprised of two opposite and aligned half-portions between which a spring (9) is arranged.

6. Anti-theft device as in any one of the previous claims, wherein the coupling head (6) is in the form of a pin having a circular groove into which the end of said pin (8) can be inserted.

7. Anti-theft device as in any one of the previous claims, wherein said coupling head (6) is joined with an adapter body to which the end of said flexible anti-theft element can easily be attached.

8. Anti-theft device as in any one of the previous claims, wherein said pin (8) is slideable within a recess obtained longitudinally to the arm (2b) of said U-shaped body from which a bulb (3) housing the safety lock (10, C) departs.

9. Anti-theft device as in any one of the previous claims, wherein said flexible retaining element is a link chain.
